(19) Europäisches Patentamt
European Patent Office
Office européen des brevets

(11) **EP 4 386 338 B1**

(12) **FASCICULE DE BREVET EUROPEEN**

(45) Date de publication et mention
de la délivrance du brevet:
**13.08.2025 Bulletin 2025/33**

(21) Numéro de dépôt: **23215807.1**

(22) Date de dépôt: **12.12.2023**

(51) Classification Internationale des Brevets (IPC):
***G01H 7/00*** *(2006.01)*     ***H04S 7/00*** *(2006.01)*
***G10K 15/08*** *(2006.01)*

(52) Classification Coopérative des Brevets (CPC):
**G01H 7/00; H04S 7/303;** G10K 15/08; H04S 7/305

(54) **RESTITUTION AUDIO OPTIMISEE EN TEMPS REEL**

OPTIMIERTE ECHTZEIT-AUDIOWIEDERGABE

REAL-TIME OPTIMIZED AUDIO RENDERING

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **13.12.2022 FR 2213266**

(43) Date de publication de la demande:
**19.06.2024 Bulletin 2024/25**

(73) Titulaire: **Sagemcom Broadband SAS
92270 Bois-Colombes (FR)**

(72) Inventeurs:
• **SABATIER, Pierre
92270 Bois-Colombes (FR)**
• **BOURGOIN, Gilles
92270 Bois-Colombes (FR)**

(74) Mandataire: **Cabinet Boettcher et al
5, rue de Vienne
75008 Paris (FR)**

(56) Documents cités:
**EP-A1- 3 840 422    WO-A1-2022/231338**

**Description**

L'invention concerne le domaine des systèmes de restitution audio.

ARRIERE PLAN DE L'INVENTION

De nombreux équipements sont aujourd'hui munis de haut-parleurs et proposent une restitution audio d'excellente qualité.

Parmi ces équipements, on trouve bien sûr des enceintes (notamment des enceintes connectées, ou *smart speakers*), des barres de son, des téléviseurs, des assistants vocaux, des *smartphones,* etc. On trouve aussi désormais des boîtiers décodeurs (ou STB, pour *Set-Top Box*) améliorés, munis de haut-parleurs.

Lorsqu'un utilisateur possède plusieurs équipements de restitution audio récents, il peut généralement les configurer pour former un système multicanal.

Pour améliorer encore l'expérience utilisateur, on cherche à optimiser la qualité de la restitution audio en fonction de la position de l'utilisateur dans la pièce dans laquelle sont situés les équipements de restitution audio.

On connaît ainsi un système qui met en œuvre une phase de calibration consistant à positionner un microphone dans une position de référence, puis à commander les équipements de restitution audio pour que ceux-ci produisent un signal sonore de test, qui est capturé par le microphone. Le résultat de la capture est utilisé pour ajuster les paramètres audio (retard et égalisation) de chaque équipement de restitution audio.

Ce système présente l'inconvénient suivant. Les paramètres audio permettent d'optimiser la restitution audio dans la position de référence uniquement, et il faut donc réitérer la phase de calibration à chaque fois que l'utilisateur se déplace.

On connaît aussi un système qui comprend une pluralité d'enceintes munies chacune d'un microphone. Ce système réalise la phase de calibration suivante. L'utilisateur se positionne dans une position de référence. Il prononce alors un mot-clé qui est capturé par le microphone de chaque enceinte, ce qui permet de déterminer les distances entre les différentes enceintes et l'utilisateur. Les paramètres audio permettent d'optimiser la restitution audio dans la position de référence. Cependant, à nouveau, dans ce système, la phase de calibration doit être réitérée à chaque fois que l'utilisateur se déplace.

WO 2022/231338 A1 divulgue un dispositif de réception portable pour calibrer la configuration du dispositif en utilisant la géométrie d'une pièce. Des paramètres audio sont optimisés sur la base d'une réponse audio simulée et des informations sur l'environnement de la pièce à l'emplacement d'une zone cible.

OBJET DE L'INVENTION

L'invention a pour objet, dans une pièce dans laquelle sont positionnées une ou plusieurs sources sonores, d'optimiser la restitution audio en fonction de la position courante d'un utilisateur, sans réitérer de phase de calibration.

RESUME DE L'INVENTION

En vue de la réalisation de ce but, on propose un procédé de restitution audio, mis en œuvre par un ou des équipements maîtres, et comportant une phase préliminaire comprenant les étapes de :

- réaliser une carte d'une pièce dans laquelle se trouvent une ou des sources sonores, qui comprend une position de chaque source sonore et une position de murs de la pièce ;
- acquérir des caractéristiques acoustiques des murs ;
- réaliser une simulation, en utilisant la carte et les caractéristiques acoustiques des murs, pour simuler une propagation dans la pièce de sons émis par les sources sonores ;
- à partir de résultats de la simulation, produire, pour chaque position de référence d'une pluralité de positions de référence définies dans la pièce, et pour chaque source sonore, des paramètres audio de référence permettant d'optimiser une restitution audio de ladite source sonore dans ladite position de référence ;

le procédé de restitution audio comportant en outre une phase opérationnelle comprenant les étapes, réalisées en temps réel, de :

- déterminer une position courante d'un utilisateur dans la pièce ;
- faire restituer un signal audio par les sources sonores en appliquant des paramètres audio courants obtenus à partir des paramètres audio de référence et qui dépendent de la position courante.

**EP 4 386 338 B1**

La simulation, réalisée au cours de la phase préliminaire, permet donc d'obtenir des paramètres audio de référence associés à des positions de référence qui peuvent être réparties dans toute la pièce.

Au cours de la phase opérationnelle, l'équipement maître détermine la position courante de l'utilisateur et fait appliquer par les sources sonores des paramètres audio courants, qui dépendent de la position courante et qui sont obtenus à partir des paramètres audio de référence.

La restitution audio est donc optimisée en temps réel, quelle que soit la position de l'utilisateur dans la pièce, sans qu'il ne soit nécessaire de réitérer la phase préliminaire (sauf si la position des sources sonores et/ou les matériaux des murs sont modifiés de manière significative).

On propose de plus un procédé de restitution audio tel que précédemment décrit, dans lequel la simulation utilise une technique de lancer de rayons.

On propose de plus un procédé de restitution audio tel que précédemment décrit, dans lequel les caractéristiques acoustiques des murs comprennent, pour chaque mur, des valeurs pour différentes fréquences d'un coefficient d'absorption d'un matériau du mur ou d'une catégorie de matériaux incluant ledit matériau.

On propose de plus un procédé de restitution audio tel que précédemment décrit, dans lequel les paramètres audio de référence comprennent, pour chaque position de référence et pour chaque source sonore, des valeurs de gain et de déphasage pour différentes fréquences, associées à ladite la source sonore.

On propose de plus un procédé de restitution audio tel que précédemment décrit, dans lequel les positions de référence de la pluralité de positions de référence sont des nœuds d'un maillage ayant une maille de longueur prédéfinie.

On propose de plus un procédé de restitution audio tel que précédemment décrit, dans lequel, au cours de la phase opérationnelle, les paramètres audio courants qui sont appliqués sont les paramètres audio de référence d'un nœud le plus proche de la position courante.

On propose de plus un procédé de restitution audio tel que précédemment décrit, dans lequel, au cours de la phase opérationnelle, les paramètres audio courants qui sont appliqués sont obtenus en moyennant des paramètres audio de référence de plusieurs nœuds les plus proches de la position courante.

On propose de plus un procédé de restitution audio tel que précédemment décrit, dans lequel au moins l'un des équipements maîtres comprend un premier module UWB, et dans lequel la réalisation de la carte et/ou la détection de la position courante de l'utilisateur sont mises en œuvre en utilisant le premier module UWB.

On propose de plus un procédé de restitution audio tel que précédemment décrit, dans lequel la phase préliminaire comprend les étapes, pour déterminer la position des murs, de :

- émettre un premier message à destination de l'utilisateur pour demander à celui-ci d'effectuer un parcours longeant les murs au plus près de ceux-ci ;
- déterminer la position en temps réel de l'utilisateur lorsque celui-ci effectue ledit parcours, et déterminer la position des murs à partir de cette position en temps réel.

On propose de plus un procédé de restitution audio tel que précédemment décrit, dans lequel l'utilisateur est muni lorsqu'il effectue ledit parcours d'un équipement mobile comportant un deuxième module UWB, la détermination de la position en temps réel de l'utilisateur étant réalisée par une technique de géolocalisation UWB en utilisant le premier module UWB et le deuxième module UWB.

On propose de plus un procédé de restitution audio tel que précédemment décrit, dans lequel, au cours de la phase opérationnelle, l'utilisateur est muni d'un équipement mobile comportant un deuxième module UWB, la détermination de la position courante de l'utilisateur étant réalisée par une technique de géolocalisation UWB réalisée en utilisant le premier module UWB et le deuxième module UWB.

On propose de plus un procédé de restitution audio tel que précédemment décrit, dans lequel le premier module UWB est agencé pour mettre en œuvre une technologie de radar UWB, la détermination de la position des murs de la pièce étant réalisée par l'équipement maître en utilisant ladite technologie de radar UWB.

On propose de plus un procédé de restitution audio tel que précédemment décrit, dans lequel l'utilisateur, au cours de la phase préliminaire, est muni d'un équipement mobile comportant un deuxième module UWB, la phase préliminaire comprenant l'étape, pour au moins une source sonore, d'émettre un deuxième message à destination de l'utilisateur pour demander à celui-ci de positionner l'équipement mobile à proximité immédiate de la source sonore, la position de ladite source sonore étant alors assimilée à la position de l'équipement mobile, qui est déterminée par une technique de géolocalisation UWB en utilisant le premier module UWB et le deuxième module UWB.

On propose de plus un procédé de restitution audio tel que précédemment décrit, dans lequel au moins une source sonore comporte un *tag* UWB, l'équipement maître étant agencé pour déterminer la position de ladite source sonore en utilisant une technique de géolocalisation UWB réalisée en utilisant le premier module UWB et le *tag* UWB.

On propose de plus un équipement maître comportant un premier module UWB agencé pour réaliser une géolocalisation, et une unité de traitement agencée pour mettre en œuvre le procédé de restitution audio tel que précédemment décrit.

On propose de plus un équipement maître tel que précédemment décrit, l'équipement maître étant un boîtier décodeur.

On propose de plus un programme d'ordinateur comprenant des instructions qui conduisent l'unité de traitement de l'équipement maître tel que précédemment décrit à exécuter les étapes du procédé de restitution audio tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

BREVE DESCRIPTION DES DESSINS

Il sera fait référence aux dessins annexés parmi lesquels :

[Fig. 1] la figure 1 représente une pièce vue de dessus, dans laquelle sont positionnés un boîtier décodeur, un téléviseur et deux enceintes ;
[Fig. 2] la figure 2 représente un boîtier décodeur dans lequel est mise en œuvre l'invention ;
[Fig. 3] la figure 3 illustre la technique du lancer de rayons et représente les rayons sonores entre une source et une position de référence (un seul rayon en l'occurrence), sans réflexion sur les murs ;
[Fig. 4] la figure 4 est une figure similaire à la figure 3, avec une réflexion sur les murs ;
[Fig. 5] la figure 5 est une figure similaire à la figure 3, avec deux réflexions sur les murs ;
[Fig. 6] la figure 6 est une figure similaire à la figure 3, avec trois réflexions sur les murs ;
[Fig. 7] la figure 7 représente une carte réalisée au cours de l'étape de cartographie, sur laquelle est représentée en plus un auditeur virtuel ;
[Fig. 8] la figure 8 représente des résultats de la simulation par lancer de rayons ;
[Fig. 9] la figure 9 est une figure similaire à la figure 8, obtenue en tenant compte de la directivité de l'enceinte de la source sonore ;
[Fig. 10] la figure 10 illustre la transmission des paramètres audio courants du boîtier décodeur aux sources sonores, et la restitution d'un signal audio.

DESCRIPTION DETAILLEE DE L'INVENTION

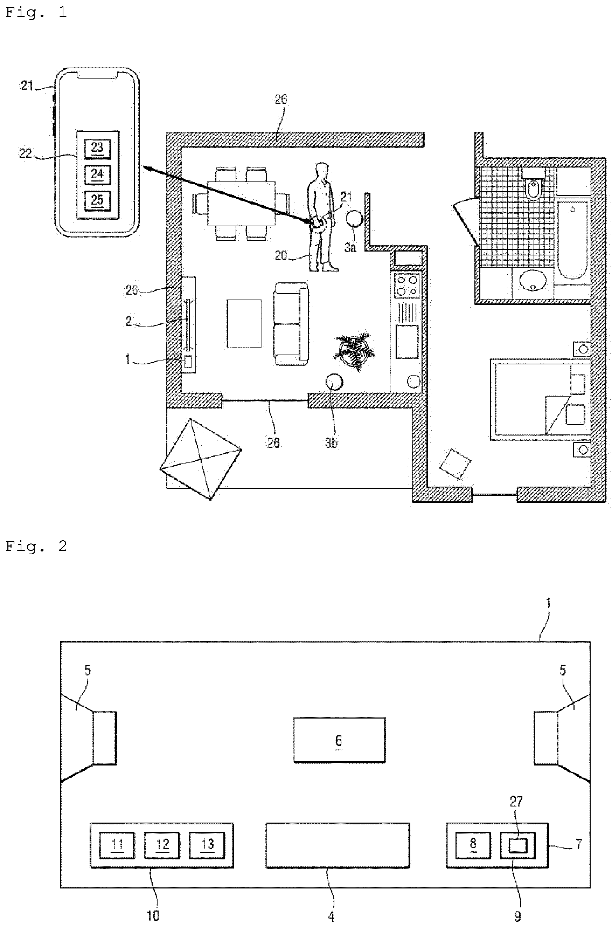

En référence à la figure 1, un boîtier décodeur 1, un téléviseur 2 et deux enceintes 3a, 3b sont situés dans une pièce.

Le boîtier décodeur 1 est relié au téléviseur 2, par exemple par un câble de type HDMI (pour *High-Definition Multimedia Interface).*

En référence à la figure 2, le boîtier décodeur 1 comprend des composants 4 classiquement présents dans un boîtier décodeur 1, et notamment des composants agencés pour acquérir un flux audio-vidéo provenant d'une source quelconque (réseau de télévision par satellite, connexion Internet, lecteur de *BlueRay,* etc.) et comprenant un signal audio et un signal vidéo, et pour traiter et transmettre aux équipements auxquels il est connecté (ici le téléviseur 2 et les enceintes 3a, 3b) le signal audio et le signal vidéo pour leur restitution.

Le boîtier décodeur 1 comprend de plus deux haut-parleurs 5, ainsi qu'un module audio 6 agencé pour acquérir, traiter, amplifier des signaux audio, et les transmettre aux haut-parleurs 5.

Le boîtier décodeur 1 comprend aussi une unité de traitement 7. L'unité de traitement 7 comprend au moins un composant de traitement 8 (électronique et/ou logiciel), qui est par exemple un processeur « généraliste », un processeur spécialisé dans le traitement du signal (ou DSP, pour *Digital Signal Processor),* un microcontrôleur, ou bien un circuit logique programmable tel qu'un FPGA (pour *Field Programmable Gate Arrays*) ou un ASIC (pour *Application Specific Integrated Circuit).* L'unité de traitement 7 comprend aussi une ou des mémoires 9 (et notamment une ou des mémoires non-volatiles), reliées à ou intégrées dans le composant de traitement 8. Au moins l'une de ces mémoires 9 forme un support d'enregistrement lisible par ordinateur, sur lequel est enregistré au moins un programme d'ordinateur comprenant des instructions qui conduisent le composant de traitement 8 à exécuter au moins certaines des étapes du procédé de restitution audio qui sera décrit plus bas.

Le boîtier décodeur 1 comprend de plus un premier module UWB 10 (pour *Ultra Wide Band,* ou Ultra Large Bande), qui comporte un composant de communication UWB 11, un ensemble d'au moins une antenne UWB 12 et un microcontrôleur 13. Le microcontrôleur 13 est relié à l'unité de traitement 7 (via une liaison série par exemple). Le microcontrôleur 13 dialogue avec le composant de communication UWB 11 et avec l'unité de traitement 7.

L'ensemble d'au moins une antenne UWB 12 comprend ici deux antennes UWB qui sont reliées au composant de communication UWB 11.

Le premier module UWB 10 peut ainsi mesurer non seulement la distance entre un équipement externe qui lui-même émet et reçoit des signaux UWB, mais aussi l'angle d'arrivée des signaux UWB émis par ledit équipement externe.

Le microcontrôleur 13 fournit en particulier à l'unité de traitement 7 des informations de localisation produites par le premier module UWB 10.

Le procédé de restitution audio est mis en œuvre par un ou des équipements maîtres. Ici, et de manière non limitative, le procédé de restitution audio est mis en œuvre entièrement par l'unité de traitement 7 du boîtier décodeur 1 (qui est donc l'équipement maître).

La pièce, dans laquelle se trouve le système qui vient d'être décrit, appartient à l'habitation d'un utilisateur 20.

L'utilisateur 20 est muni d'un équipement mobile 21, un smartphone en l'occurrence, qui intègre un deuxième module UWB 22. Le deuxième module UWB 22 comporte un composant de communication UWB 23, un ensemble d'au moins une antenne UWB 24 et un microcontrôleur 25.

Le procédé de restitution audio a pour but d'optimiser la restitution audio réalisée par le boîtier décodeur 1 et les enceintes 3a, 3b en fonction de la position de l'utilisateur 20 dans la pièce.

Le procédé de restitution audio comprend une phase préliminaire et une phase opérationnelle.

La phase préliminaire peut être assimilée à une phase de calibration.

La phase opérationnelle, quant à elle, correspond à l'utilisation normale, habituelle de ses équipements par l'utilisateur 20. Lorsque l'utilisateur 20 se déplace dans la pièce et qu'il écoute un contenu audio, le procédé de restitution audio optimise l'expérience acoustique de l'utilisateur 20 en temps réel, en fonction de sa position (et quelle que soit celle-ci).

La phase préliminaire comprend tout d'abord une étape de cartographie, qui consiste à réaliser une carte de la pièce. Cette carte comprend au moins la position de chaque source sonore, c'est-à-dire en l'occurrence ici du boîtier décodeur 1 et des deux enceintes 3a, 3b, et une position des murs 26 de la pièce.

Ici, par « murs », on entend tous les éléments de la pièce qui s'étendent verticalement et qui délimitent la surface de la pièce : murs, fenêtres, baies vitrées, meubles (tels que des armoires), etc.

On décrit un premier mode de réalisation de cette étape de cartographie.

Pour déterminer la position des murs 26, l'unité de traitement 7 du boîtier décodeur 1 émet tout d'abord un premier message à destination de l'utilisateur 20 pour demander à celui-ci d'effectuer un parcours longeant les murs 26 au plus près de ceux-ci.

L'unité de traitement 7 détermine la position en temps réel de l'utilisateur 20 lorsque celui-ci effectue ledit parcours (il s'agit plus précisément de la position du smartphone 21), et détermine ainsi la position des murs 26 dans la pièce à partir de cette position en temps réel. L'unité de traitement 7 assimile donc le tracé du parcours réalisé par l'utilisateur 20 à la base des murs 26.

La détermination de la position en temps réel de l'utilisateur 20 est réalisée par une technique de géolocalisation UWB en utilisant le premier module UWB 10 (du boîtier décodeur 1) et le deuxième module UWB 22 (du smartphone 21). Comme on l'a vu plus tôt, le premier module UWB 10 localise précisément le smartphone 21 à partir de signaux UWB émis par celui-ci.

Pour déterminer la position de chaque source sonore, l'unité de traitement 7 émet un deuxième message à destination de l'utilisateur 20 pour demander à celui-ci de positionner le smartphone 21 à proximité immédiate de la source sonore. Par exemple, l'utilisateur place le smartphone 21 sur ou contre la source sonore, ou bien se positionne lui-même juste à côté de la source sonore. La position de ladite source sonore est alors assimilée à la position du smartphone 21, qui est déterminée par une technique de géolocalisation UWB en utilisant le premier module UWB 10 et le deuxième module UWB 22.

Bien sûr, ici, cela ne concerne que les enceintes 3a, 3b car la position du boîtier décodeur 1 (en tant que source sonore) est connue.

L'unité de traitement 7 acquiert ensuite des caractéristiques acoustiques des murs 26.

Les caractéristiques acoustiques des murs 26 comprennent, pour chaque mur 26, des valeurs pour différentes fréquences d'un coefficient d'absorption d'un matériau du mur 26. Par « un matériau du mur », on entend soit un matériau avec lequel est fabriqué le mur, soit un matériau d'un revêtement recouvrant la paroi interne (côté pièce) du mur, soit un matériau d'un élément quelconque positionné sur ou contre le mur (une tenture par exemple).

L'utilisateur utilise par exemple une application chargée dans son smartphone 21 pour renseigner le type de matériau des murs 26 de la pièce (béton, vitre, rideau, parquet, moquette, etc.). Ces informations sont transmises à l'unité de traitement 7 via un canal de communication quelconque entre le smartphone 21 et le boîtier décodeur 1 (par exemple en Wi-Fi, Bluetooth, etc.).

L'unité de traitement 7 utilise une table 27 stockée dans l'une des mémoires 9 (non volatile). La table 27 associe à chaque matériau un coefficient d'absorption pour chaque fréquence.

Alternativement, il est possible de prévoir plusieurs catégories générales, qui chacune regroupe une pluralité de matériaux. Puis, pour un mur 26 donné, soit l'utilisateur 20 renseigne le matériau et l'unité de traitement 7 en déduit une catégorie générale à laquelle appartient ledit matériau, soit l'utilisateur 20 renseigne directement la catégorie générale à laquelle appartient ledit matériau.

Un exemple de table 27 est donné ci-dessous. Cette table 27 associe, pour chaque catégorie générale de matériaux et pour plusieurs fréquences, un coefficient d'absorption associé à ladite catégorie générale et à ladite fréquence.

| Catégorie générale de matériaux | coefficient d'absorption acoustique du matériau | | | | | |
|---|---|---|---|---|---|---|
| | 125Hz | 250Hz | 500Hz | 1kHz | 2kHz | 4kHz |
| Vitres - sol/mur non traités | 0,10 | 0,10 | 0,10 | 0,10 | 0,10 | 0,10 |
| Tentures - rideaux - moquette | 0,10 | 0,20 | 0,40 | 0,50 | 0,65 | 0, 60 |
| Traitement absorbant | 0,20 | 0,55 | 0, 60 | 0, 70 | 0,80 | 0, 90 |

On a donc ici trois catégories générales de matériaux : vitres - sol/mur non traités ; tentures - rideaux - moquette ; traitement absorbant.

L'unité de traitement 7 réalise alors une simulation, en utilisant la carte et les caractéristiques acoustiques des murs 26, pour simuler une propagation dans la pièce de sons émis par les sources sonores

La simulation utilise une technique de lancer de rayons (ou *ray tracing*). Cette technique permet de définir l'impact acoustique de la pièce sur la propagation acoustique des ondes sonores générés par les sources sonores : boîtier décodeur 1 et enceintes 3a, 3b.

On décrit tout d'abord le principe de la technique de lancer de rayons. Cette technique consiste à tirer des rayons à partir d'une source sonore vers le point de mesure en prenant en compte les chemins avec les réflexions sur les murs, et en faisant la somme des contributions de chaque rayon.

Cette simulation reproduit donc, pour chaque position de référence d'une pluralité de positions de référence, le parcours des rayons sonores entre chaque source sonore et ladite position de référence, en tenant compte des réflexions sur les murs et le plafond.

La simulation tient compte de chaque réflexion sur les murs 26 en évaluant le niveau Nr de l'onde sonore réfléchie, en fonction du niveau Ni de l'onde sonore incidente et du coefficient d'absorption du mur 26 contre lequel l'onde est réfléchie, de la manière suivante :

$$Nr = Ni \times \alpha$$

où $\alpha$ est le coefficient d'absorption du matériau du mur (compris entre 0 et 1).

Par exemple, dans le cas de la moquette, à 1 kHz, on a $\alpha = 0{,}5$. Le niveau de l'onde sonore réfléchie est alors égal au niveau de l'onde sonore incidente divisé par 2 (soit une atténuation de 6 dB).

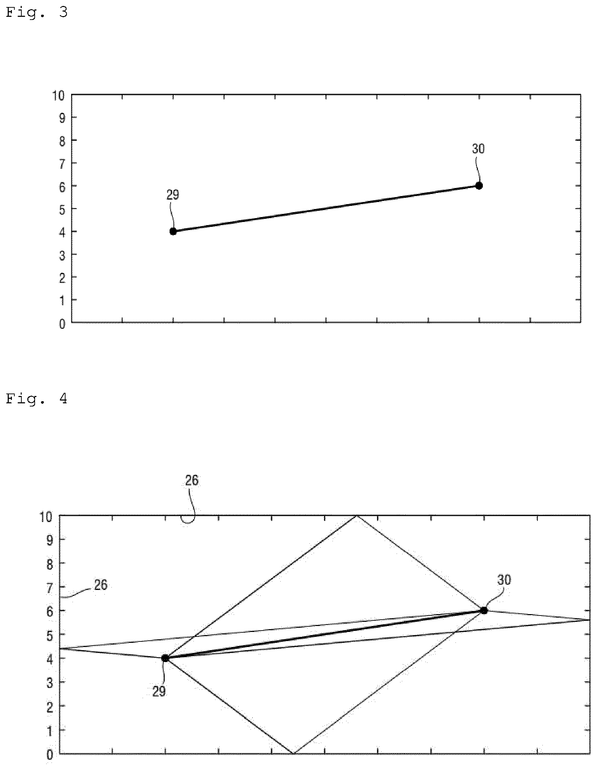

On voit sur la figure 3 un rayon sonore direct (sans réflexion sur les murs 26) entre une source sonore 29 et une position de référence 30.

On voit sur la figure 4 les rayons sonores avec une réflexion sur les murs 26.

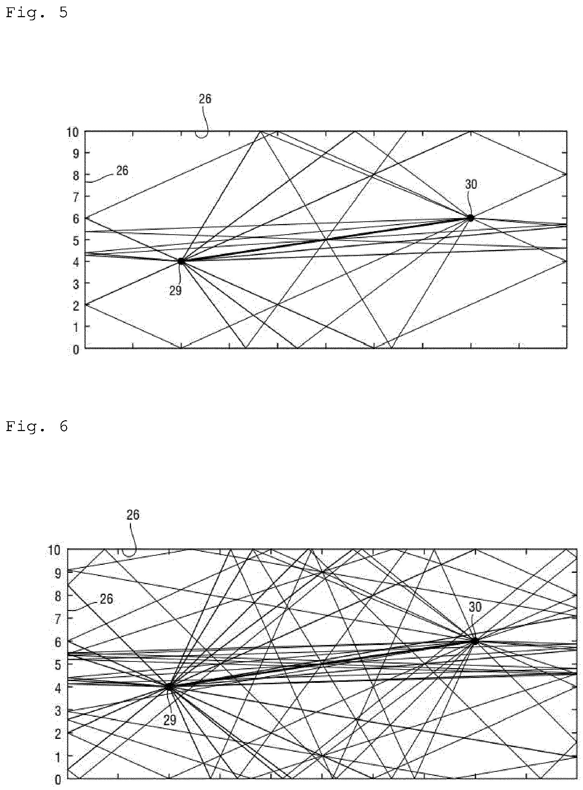

On voit sur la figure 5 les rayons sonores avec deux réflexions sur les murs 26.

On voit sur la figure 6 les rayons sonores avec trois réflexions sur les murs 26.

Ces simulations sont réalisées pour chaque source sonore de la pièce, pour chaque positon de référence, et pour une pluralité de fréquences.

Le calcul du lancer de rayons équivaut au positionnement d'un microphone d'ambiance via sa mesure physique. Toutes les données nécessaires sont calculées, comme pour une calibration du microphone. Toutes les données d'atténuation du point d'écoute par rapport aux différentes enceintes sont ainsi calculées. Les données pour le traitement du son immersif sont calculées pour compenser les distances et les réflexions.

A partir des résultats de la simulation, l'unité de traitement 7 produit, pour chaque position de référence de la pluralité de positions de référence, et pour chaque source sonore, des paramètres audio de référence permettant d'optimiser une restitution audio de ladite source sonore dans ladite position de référence.

Les paramètres audio de référence comprennent, pour chaque position de référence et pour chaque source sonore, des valeurs de gain et de déphasage pour différentes fréquences, associées à ladite source sonore.

Les positions de référence de la pluralité de positions de référence sont ici des nœuds d'un maillage ayant une maille de longueur prédéfinie.

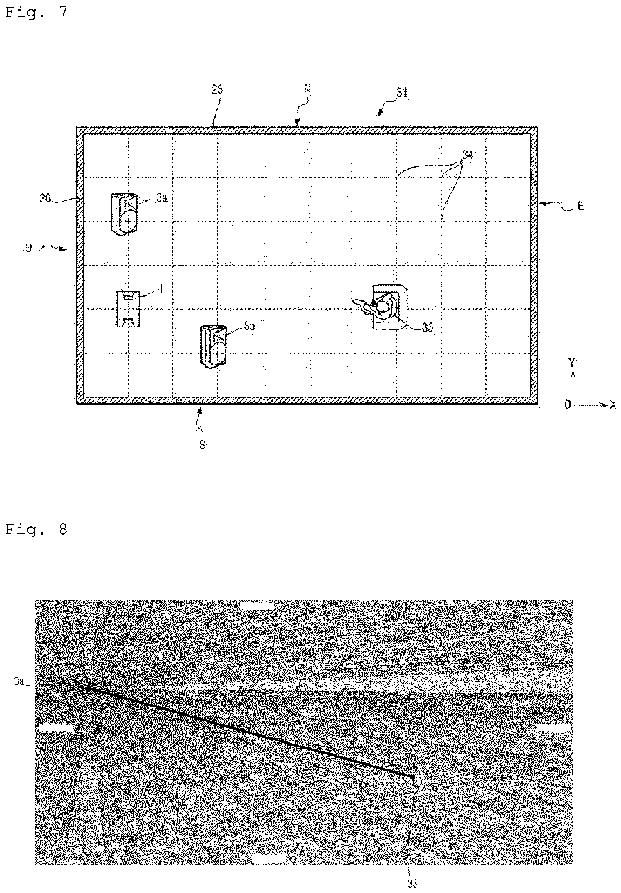

En référence à la figure 7, une carte 31 a été réalisée par le boîtier décodeur 1. Le boîtier décodeur 1 et les enceintes 3a, 3b (enceintes omnidirectionnelles) sont situés dans une salle de séjour parallélépipédique de 6 m x 10 m.

On voit donc sur cette carte 31 la position des sources sonores 1, 3a, 3b et des murs 26.

Le maillage 32 est défini sur cette carte 31. La maille est par exemple égale à 1m.

On voit aussi sur la figure 7 un auditeur virtuel 33 qui, bien sûr, ne figure pas en réalité sur la carte 31. L'auditeur virtuel est positionné sur un des nœuds 34 du maillage 32.

On s'intéresse à la simulation des sons émis par l'enceinte 3a.

L'enceinte 3a est positionnée sur un des nœuds du maillage.

Les positions de références correspondent aux nœuds du maillage.

Le retard r du signal sonore émis par l'enceinte 3a est directement lié à la distance entre l'enceinte 3a et l'auditeur virtuel 33 :

$$r = [(X_{auditeur} - X_{enceinte})^2 + (Y_{auditeur} - Y_{enceinte})^2]^{1/2} / c,$$

où $(X_{auditeur} ; Y_{auditeur})$ et $(X_{enceinte} ; Y_{enceinte})$ sont les coordonnées de l'auditeur virtuel 33 et de l'enceinte 3a dans un repère défini par les axes OX et OY et associé à la carte, et où c est la célérité du son.

On considère par exemple que les deux murs latéraux les plus long (N et S) ne sont pas traités acoustiquement, de sorte qu'ils présentent un coefficient d'absorption moyen $\alpha$ égal à 0,1 à 1 kHz (voir table plus haut).

On considère par exemple que les deux autres murs (O et E) sont revêtus de tentures, de sorte qu'ils présentent un coefficient d'absorption moyen $\alpha$ égal à 0,5 à 1 kHz (voir table plus haut).

Les résultats de la simulation par lancer de rayons, visibles sur la figure 8, donnent, pour une fréquence donnée, une amplification du niveau sonore au niveau de l'auditeur virtuel 33 de +10,1 dB par rapport au signal en champ libre.

Cette amplification doit être compensée, à la fréquence donnée (ici 1 kHz), par une valeur de gain de -10,1 dB. Cette valeur de gain est l'un des paramètres audio de référence associés à la fréquence donnée et à la position de référence dans la pièce correspondant à la position de l'auditeur virtuel 33.

Ce calcul est donc réalisé pour chacun des nœuds 34 du maillage, fréquence par fréquence.

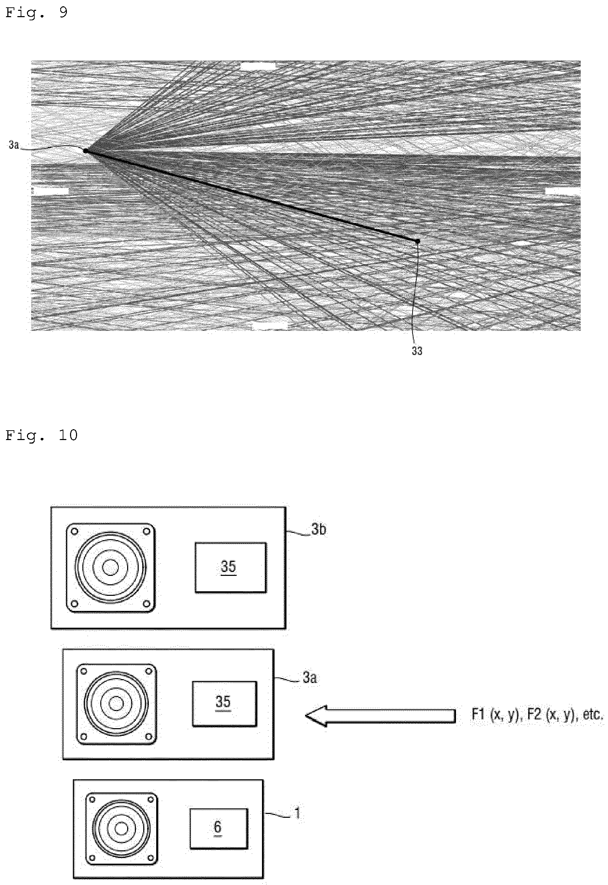

Afin d'améliorer la précision, ce calcul peut être affiné en intégrant la directivité de l'enceinte de la source sonore selon les fréquences. Les résultats de cette nouvelle simulation sont visibles sur la figure 9.

Dans l'exemple précédent, si l'on supprime les rayons au-delà de +/- 60° de l'axe de l'enceinte 3a, l'effet de la salle au niveau de l'auditeur virtuel se réduirait à +6,9 dB (au lieu des +10,1 dB sans prendre en compte la directivité).

La simulation permet d'obtenir, pour chaque position de référence, c'est-à-dire pour chaque nœud 34 de la grille 32, et pour chaque source sonore, une fonction de transfert définissant un gain (fonction de la fréquence) et un déphasage (fonction de la fréquence).

On a donc, pour chaque position de référence (x, y) :

- une fonction de transfert F1 (x, y) pour la première source sonore ;
- une fonction de transfert F2 (x, y) pour la source sonore numéro 2 ;
- Etc.

On note qu'un haut-parleur est considéré comme formant une source sonore. Par conséquent, les enceintes multivoies comprenant une pluralité de haut-parleurs sont considérées comme autant de sources sonores positionnées au même endroit (et éventuellement avec une même orientation).

Les paramètres audio de référence sont enregistrés dans l'une des mémoires 9 (non-volatile) de l'unité de traitement 7.

Une fois que la phase préliminaire a été réalisée, la phase opérationnelle peut débuter.

Elle dure jusqu'à une éventuelle phase préliminaire suivante, qui est mise en œuvre uniquement en cas de déplacement significatif d'une ou de plusieurs sources sonores, ou bien en cas de changement significatif d'un matériau d'un mur de la pièce

Au cours de la phase opérationnelle, l'unité de traitement 7 du boîtier décodeur 1 détermine en temps réel la position courante de l'utilisateur 20 dans la pièce lorsque celui-ci écoute un signal audio restitué par le boîtier décodeur 1 et les enceintes 3a, 3b.

La détermination de la position courante de l'utilisateur 20 est réalisée par une technique de géolocalisation UWB réalisée en utilisant le premier module UWB 10 et le deuxième module UWB 22.

L'unité de traitement 7 fait alors restituer le signal audio par les sources sonores en appliquant des paramètres audio courants obtenus à partir des paramètres audio de référence et qui dépendent de la position courante.

Dans un premier mode de réalisation, les paramètres audio courants qui sont appliqués sont les paramètres audio de référence d'un nœud 34 le plus proche de la position courante de l'utilisateur 20.

Dans un deuxième mode de réalisation, les paramètres audio courants qui sont appliqués sont obtenus en moyennant des paramètres audio de référence de plusieurs nœuds 34 les plus proches de la position courante de l'utilisateur 20. Le moyennage permet d'éviter des transitions trop brutales lorsque l'utilisateur 20 se déplace.

En référence à la figure 10, l'unité de traitement 7 du boîtier décodeur 1 transmet en temps réel les paramètres audio courants (F1 (x, y), F2 (x, y), etc.), associés à la position courante de l'utilisateur 20, au module audio 6 du boîtier décodeur 1 et au module audio 35 de chaque enceinte 3a, 3b.

Le module audio 6, 35 de chaque source sonore acquiert les paramètres audio courants qui sont attribués à ladite source sonore, réalise des traitements pour appliquer lesdits paramètres audio courants, et restitue le signal audio. L'unité de traitement 7 pilote donc les sources sonores pour qu'elles restituent le signal audio en appliquant les paramètres audio courants.

Ainsi les retards acoustiques et phases sont pris en compte en tenant compte de la nature acoustique de la pièce.

Bien entendu, l'invention n'est pas limitée aux modes de réalisation décrits mais englobe toute variante entrant dans le champ de l'invention tel que défini par les revendications.

On a décrit des architectures pour le boîtier décodeur et pour le smartphone, qui ne sont bien sûr pas limitatives. Les modules UWB pourraient comprendre des composants différents de ceux décrits ici. Dans le boîtier décodeur, le microcontrôleur et/ou le composant de communication UWB du premier module UWB pourraient par exemple être intégrés dans l'unité de traitement.

La détermination de la position des murs, utilisée pour produire la carte de la pièce, pourrait être réalisée de manière différente. Par exemple, si le smartphone de l'utilisateur (ou tout autre équipement mobile) comprend un capteur LiDAR (pour *Light Detection And Ranging,* que l'on peut traduire par détection et estimation de la distance par la lumière), il est possible de l'utiliser pour réaliser une cartographie 3D de la pièce plus précise et plus rapide.

La technologie radar UWB peut également être utilisée pour réaliser la carte de la pièce. Le boîtier décodeur peut ainsi intégrer un radar UWB. Le radar UWB positionne en coordonnées polaires des échos dans la pièce. Les échos sont ensuite analysés pour constituer un modèle de la pièce et pour définir la position des murs, les angles entre ceux-ci, etc.

Également, la méthode radar permet aussi d'analyser le mouvement d'une personne, qui peut comme précédemment parcourir la pièce, en synchronisation avec son smartphone (ou un autre équipement mobile) et l'application spécifique afin de réaliser la partie calibration de la pièce (parcours du périmètre de la pièce, position des sources sonores). Via l'application du smartphone les données de réflexions des surfaces pourront être également renseignées, pour revenir à la calibration de la pièce décrite plus haut.

Dans la phase opérationnelle, la position courante de l'utilisateur pourrait aussi être déterminée par le boîtier décodeur en utilisant la technologie radar UWB.

De même, la détermination de la position des sources sonores pourrait être réalisée de manière différente. Une enceinte pourrait par exemple être munie d'un *tag* UWB (ou étiquette UWB). Le boîtier décodeur peut alors déterminer la position de ladite source sonore en utilisant une technique de géolocalisation UWB réalisée en utilisant le premier module UWB et le *tag* UWB.

On a décrit que l'invention est mise en œuvre dans un équipement maître qui est le boîtier décodeur.

L'invention pourrait être mise en œuvre dans un autre équipement maître, par exemple dans une enceinte connectée, ou bien dans le smartphone de l'utilisateur.

L'invention peut parfaitement être mise en œuvre dans un seul équipement maître, comme cela est d'ailleurs décrit ici, notamment lorsque l'unité de traitement intègre un composant de traitement suffisamment puissant pour réaliser la simulation (type DSP).

Il est cependant possible de mettre en œuvre l'invention dans plusieurs équipements maîtres. Ainsi, par exemple, le boîtier décodeur pourrait réaliser l'étape de cartographie (seul ou en coopérant avec d'autres équipements, tels qu'un smartphone, comme cela est décrit ici), et transmettre la carte ou ses éléments constitutifs à un serveur du *cloud* sur lequel est réalisée la simulation. Le boîtier décodeur récupère alors les paramètres audio de référence et pilote la phase opérationnelle.

**Revendications**

1. Procédé de restitution audio, mis en œuvre par un ou des équipements maîtres (1), et comportant une phase préliminaire comprenant les étapes de :

   - réaliser une carte (31) d'une pièce dans laquelle se trouvent une ou des sources sonores (1, 3a, 3b), qui comprend une position de chaque source sonore et une position de murs (26) de la pièce ;
   - acquérir des caractéristiques acoustiques des murs ;
   - réaliser une simulation, en utilisant la carte et les caractéristiques acoustiques des murs, pour simuler une propagation dans la pièce de sons émis par les sources sonores ;
   - à partir de résultats de la simulation, produire, pour chaque position de référence (34) d'une pluralité de positions de référence définies dans la pièce, et pour chaque source sonore, des paramètres audio de référence permettant d'optimiser une restitution audio de ladite source sonore dans ladite position de référence ;

   le procédé de restitution audio comportant en outre une phase opérationnelle comprenant les étapes, réalisées en temps réel, de :

- déterminer une position courante d'un utilisateur (20) dans la pièce ;
- faire restituer un signal audio par les sources sonores en appliquant des paramètres audio courants obtenus à partir des paramètres audio de référence et qui dépendent de la position courante.

2. Procédé de restitution audio selon la revendication 1, dans lequel la simulation utilise une technique de lancer de rayons.

3. Procédé de restitution audio selon l'une des revendications précédentes, dans lequel les caractéristiques acoustiques des murs (26) comprennent, pour chaque mur, des valeurs pour différentes fréquences d'un coefficient d'absorption d'un matériau du mur ou d'une catégorie de matériaux incluant ledit matériau.

4. Procédé de restitution audio selon l'une des revendications précédentes, dans lequel les paramètres audio de référence comprennent, pour chaque position de référence et pour chaque source sonore (1, 3a, 3b), des valeurs de gain et de déphasage pour différentes fréquences, associées à ladite la source sonore.

5. Procédé de restitution audio selon l'une des revendications précédentes, dans lequel les positions de référence de la pluralité de positions de référence sont des nœuds (34) d'un maillage (32) ayant une maille de longueur prédéfinie.

6. Procédé de restitution audio selon la revendication 5, dans lequel, au cours de la phase opérationnelle, les paramètres audio courants qui sont appliqués sont les paramètres audio de référence d'un nœud (34) le plus proche de la position courante.

7. Procédé de restitution audio selon la revendication 5, dans lequel, au cours de la phase opérationnelle, les paramètres audio courants qui sont appliqués sont obtenus en moyennant des paramètres audio de référence de plusieurs nœuds (34) les plus proches de la position courante.

8. Procédé de restitution audio selon l'une des revendications précédentes, dans lequel au moins l'un des équipements maîtres comprend un premier module Ultra Wideband, UWB (10), et dans lequel la réalisation de la carte (31) et/ou la détection de la position courante de l'utilisateur sont mises en œuvre en utilisant le premier module UWB (10).

9. Procédé de restitution audio selon l'une des revendications précédentes, dans lequel la phase préliminaire comprend les étapes, pour déterminer la position des murs (26), de :

- émettre un premier message à destination de l'utilisateur pour demander à celui-ci d'effectuer un parcours longeant les murs (26) au plus près de ceux-ci ;
- déterminer la position en temps réel de l'utilisateur lorsque celui-ci effectue ledit parcours, et déterminer la position des murs (26) à partir de cette position en temps réel.

10. Procédé de restitution audio selon les revendications 8 et 9, dans lequel l'utilisateur (20) est muni lorsqu'il effectue ledit parcours d'un équipement mobile (21) comportant un deuxième module UWB (22), la détermination de la position en temps réel de l'utilisateur étant réalisée par une technique de géolocalisation UWB en utilisant le premier module UWB (10) et le deuxième module UWB (22).

11. Procédé de restitution audio selon la revendication 8, dans lequel, au cours de la phase opérationnelle, l'utilisateur (20) est muni d'un équipement mobile (21) comportant un deuxième module UWB (22), la détermination de la position courante de l'utilisateur étant réalisée par une technique de géolocalisation UWB réalisée en utilisant le premier module UWB (10) et le deuxième module UWB (22).

12. Procédé de restitution audio selon la revendication 8, dans lequel le premier module UWB est agencé pour mettre en œuvre une technologie de radar UWB, la détermination de la position des murs (26) de la pièce étant réalisée par l'équipement maître en utilisant ladite technologie de radar UWB.

13. Procédé de restitution audio selon la revendication 8, dans lequel l'utilisateur (20), au cours de la phase préliminaire, est muni d'un équipement mobile (21) comportant un deuxième module UWB (22), la phase préliminaire comprenant l'étape, pour au moins une source sonore (3a, 3b), d'émettre un deuxième message à destination de l'utilisateur pour demander à celui-ci de positionner l'équipement mobile (21) à proximité immédiate de la source sonore, la position de ladite source sonore étant alors assimilée à la position de l'équipement mobile (21), qui est déterminée par une technique de géolocalisation UWB en utilisant le premier module UWB (10) et le deuxième module UWB (22).

14. Procédé de restitution audio selon la revendication 8, dans lequel au moins une source sonore comporte un *tag* UWB, l'équipement maître étant agencé pour déterminer la position de ladite source sonore en utilisant une technique de géolocalisation UWB réalisée en utilisant le premier module UWB (10) et le *tag* UWB.

15. Equipement maître (1) comportant un premier module UWB (10) agencé pour réaliser une géolocalisation, et une unité de traitement (7) agencée pour mettre en œuvre le procédé de restitution audio selon l'une des revendications précédentes.

16. Equipement maître selon la revendication 15, l'équipement maître étant un boîtier décodeur (1).

17. Programme d'ordinateur comprenant des instructions qui conduisent l'unité de traitement (7) de l'équipement maître (1) selon l'une des revendications 15 ou 16 à exécuter les étapes du procédé de restitution audio selon l'une des revendications 1 à 14.

18. Support d'enregistrement lisible par ordinateur, sur lequel est enregistré le programme d'ordinateur selon la revendication 17.

**Patentansprüche**

1. Verfahren zur Audiowiedergabe, welches von einem oder mehreren Mastergeräten (1) ausgeführt wird und eine Vorbereitungsphase enthält, welche die Schritte umfasst, dass:

   - eine Karte (31) eines Raums, in dem sich eine oder mehrere Schallquellen (1, 3a, 3b) befinden, erstellt wird, welche eine Position jeder Schallquelle und eine Position von Wänden (26) des Raums umfasst;
   - akustische Eigenschaften der Wände gewonnen werden;
   - unter Verwendung der Karte und der akustischen Eigenschaften der Wände eine Simulation durchgeführt wird, in welcher nachgebildet wird, wie sich von den Schallquellen ausgesendete Töne im Raum ausbreiten;
   - anhand von Ergebnissen der Simulation für jede Referenzposition (34) aus einer Mehrzahl von im Raum definierten Referenzpositionen und für jede Schallquelle Referenz-Audioparameter erzeugt werden, die eine optimierte Audiowiedergabe der Schallquelle in der jeweiligen Referenzposition ermöglichen;

   wobei das Verfahren zur Audiowiedergabe ferner eine Betriebsphase enthält, welche die in Echtzeit durchzuführenden Schritte umfasst, dass:

   - eine aktuelle Position eines Benutzers (20) im Raum ermittelt wird;
   - veranlasst wird, dass ein Audiosignal von den Schallquellen wiedergegeben wird, indem aktuelle Audioparameter, die aus den Referenz-Audioparametern gewonnen wurden und von der aktuellen Position abhängig sind, angewandt werden.

2. Verfahren zur Audiowiedergabe nach Anspruch 1, wobei die Simulation die Technologie der Strahlverfolgung verwendet.

3. Verfahren zur Audiowiedergabe nach einem der vorhergehenden Ansprüche, wobei die akustischen Eigenschaften der Wände (26) für jede Wand Werte für verschiedene Frequenzen eines Absorptionskoeffizienten eines Wandmaterials oder einer das besagte Material einschließenden Materialkategorie umfassen.

4. Verfahren zur Audiowiedergabe nach einem der vorhergehenden Ansprüche, wobei die Referenz-Audioparameter für jede Referenzposition und für jede Schallquelle (1, 3a, 3b) die der jeweiligen Schallquelle zugeordneten Verstärkungswerte und Phasenverschiebungswerte für verschiedene Frequenzen umfassen.

5. Verfahren zur Audiowiedergabe nach einem der vorhergehenden Ansprüche, wobei es sich bei den Referenzpositionen aus der Mehrzahl der Referenzpositionen um Knoten (34) eines Gitternetzes (32) mit einer Maschenweite von vordefinierter Länge handelt.

**6.** Verfahren zur Audiowiedergabe nach Anspruch 5, wobei es sich während der Betriebsphase bei den angewandten aktuellen Audioparametern um die Referenz-Audioparameter eines der aktuellen Position nächstgelegenen Knotens (34) handelt.

**7.** Verfahren zur Audiowiedergabe nach Anspruch 5, wobei die während der Betriebsphase angewandten aktuellen Audioparameter durch Mittelung von Referenz-Audioparametern von mehreren, der aktuellen Position nächstgelegenen Knoten (34) gewonnen werden.

**8.** Verfahren zur Audiowiedergabe nach einem der vorhergehenden Ansprüche, wobei zumindest eines der Mastergeräte ein erstes Ultra-Wideband-Modul, UWB-Modul (10), umfasst und wobei die Erstellung der Karte (31) und/oder die Erfassung der aktuellen Position des Benutzers unter Verwendung des ersten UWB-Moduls (10) erfolgen.

**9.** Verfahren zur Audiowiedergabe nach einem der vorhergehenden Ansprüche, wobei die Vorbereitungsphase zur Bestimmung der Position der Wände (26) die Schritte umfasst, dass:

- eine erste Nachricht an den Benutzer gesendet wird, um diesen aufzufordern, eine möglichst nah den Wänden (26) entlang verlaufende Strecke abzuschreiten;
- die Echtzeit-Position des Benutzers ermittelt wird, während dieser die Strecke abschreitet und die Position der Wände (26) anhand der jeweiligen Echtzeit-Position ermittelt wird.

**10.** Verfahren zur Audiowiedergabe nach den Ansprüchen 8 und 9, wobei der Benutzer (20) während des Abschreitens der Strecke mit einem mobilen Gerät (21) ausgestattet ist, das ein zweites UWB-Modul (22) enthält, wobei die Ermittlung der Echtzeit-Position des Benutzers unter Verwendung des ersten UWB-Moduls (10) und des zweiten UWB-Moduls (22) mit einer Technologie zur UWB-Geolokalisierung durchgeführt wird.

**11.** Verfahren zur Audiowiedergabe nach Anspruch 8, wobei der Benutzer (20) während der Betriebsphase mit einem mobilen Gerät (21) ausgestattet ist, das ein zweites UWB-Moduls (22) enthält, wobei die Ermittlung der aktuellen Position des Benutzers unter Verwendung des ersten UWB-Moduls (10) und des zweiten UWB-Moduls (22) mit einer Technologie zur UWB-Geolokalisierung durchgeführt wird.

**12.** Verfahren zur Audiowiedergabe nach Anspruch 8, wobei das erste UWB-Modul dafür ausgelegt ist, eine UWB-Radartechnologie auszuführen, wobei die Ermittlung der Position der Zimmerwände (26) unter Verwendung der UWB-Radartechnologie von dem Mastergerät durchgeführt wird.

**13.** Verfahren zur Audiowiedergabe nach Anspruch 8, wobei der Benutzer (20) während der Vorbereitungsphase mit einem mobilen Gerät (21) ausgestattet ist, das ein zweites UWB-Modul (22) enthält, wobei die Vorbereitungsphase den Schritt umfasst, dass für zumindest eine Schallquelle (3a, 3b) eine zweite Nachricht an den Benutzer gesendet wird, um diesen aufzufordern, das mobile Gerät (21) in unmittelbarer Nähe der Schallquelle zu positionieren, wobei die Position der Schallquelle nun mit der Position des mobilen Geräts (21) gleichgesetzt wird, welche unter Verwendung des ersten UWB-Moduls (10) und des zweiten UWB-Moduls (22) mit einer Technologie zur UWB-Geolokalisierung ermittelt wird.

**14.** Verfahren zur Audiowiedergabe nach Anspruch 8, wobei zumindest eine Schallquelle ein UWB-*Tag* enthält, wobei das Mastergerät dafür ausgelegt ist, die Position der Schallquelle unter Verwendung des ersten UWB-Moduls (10) und des UWB-*Tags* mit einer Technologie zur UWB-Geolokalisierung zu ermitteln.

**15.** Mastergerät (1) enthaltend ein erstes UWM-Modul (10), das dafür ausgelegt ist, eine Geolokalisierung durchzuführen, und eine Verarbeitungseinheit (7), die dafür ausgelegt ist, das Verfahren zur Audiowiedergabe nach einem der vorhergehenden Ansprüche auszuführen.

**16.** Mastergerät nach Anspruch 15, wobei es sich bei dem Mastergerät um eine Decoderbox (1) handelt.

**17.** Computerprogramm, das Befehle umfasst, welche die Verarbeitungseinheit (7) des Mastergeräts (1) nach einem der Ansprüche 15 oder 16 dazu veranlassen, die Schritte des Verfahrens zur Audiowiedergabe nach einem der Ansprüche 1 bis 14 auszuführen.

**18.** Computerlesbares Speichermedium, auf welchem das Computerprogramm nach Anspruch 17 abgespeichert ist.

**Claims**

1. Audio playback method, implemented by one or more pieces of master equipment (1), and comprising a preliminary phase comprising the steps of:

    - producing a map (31) of a room, wherein one or more sound sources (1, 3a, 3b) are located, which comprises a position of each sound source and a position of walls (26) of the room;
    - acquiring acoustic features of the walls;
    - performing a simulation, by using the map and the acoustic features of the walls, to simulate a propagation in the room of sounds emitted by the sound sources;
    - from results of the simulation, producing, for each reference position (34) of a plurality of reference positions defined in the room, and for each sound source, reference audio parameters making it possible to optimise an audio playback of said sound source in said reference position;

    the audio playback method further comprising an operational phase comprising the steps, carried out in real time, of:

    - determining a current position of a user (20) in the room;
    - playing an audio signal back by the sound sources by applying current audio parameters obtained from reference audio parameters, and which depend on the current position.

2. Audio playback method according to claim 1, wherein the simulation uses a ray tracing technique.

3. Audio playback method according to one of the preceding claims, wherein the acoustic features of the walls (26) comprise, for each wall, values for different frequencies of an absorption coefficient of a material of the wall or of a category of materials including said material.

4. Audio playback method according to one of the preceding claims, wherein the reference audio parameters comprise, for each reference position and for each sound source (1, 3a, 3b), gain and phase shift values for different frequencies, associated with said sound source.

5. Audio playback method according to one of the preceding claims, wherein the reference positions of the plurality of reference positions are nodes (34) of a grid (32) having a predefined grid cell length.

6. Audio playback method according to claim 5, wherein, during the operational phase, the current audio parameters which are applied are the reference audio parameters of a node (34) closest to the current position.

7. Audio playback method according to claim 5, wherein, during the operational phase, the current audio parameters which are applied are obtained by averaging the reference audio parameters of several nodes (34) closest to the current position.

8. Audio playback method according to one of the preceding claims, wherein at least one of the pieces of master equipment comprises a first Ultra Wideband UWB module (10), and wherein the production of the map (31) and/or the detection of the current position of the user are implemented by using the first UWB module (10).

9. Audio playback method according to one of the preceding claims, wherein the preliminary phase comprises the steps, to determine the position of the wall (26), of:

    - emitting a first message intended for the user to request them to perform a route along the walls (26) closest to these;
    - determining the position, in real time, of the user when they perform said route, and determining the position of the walls (26) from this position in real time.

10. Audio playback method according to claims 8 and 9, wherein the user (20) is provided, when they perform said route, with a piece of mobile equipment (21) comprising a second UWB module (22), the determination of the position in real time of the user being made by a UWB geolocation technique, by using the first UWB module (10) and the second UWB module (22).

11. Audio playback method according to claim 8, wherein, during the operational phase, the user (20) is provided with a piece of mobile equipment (21) comprising a second UWB module (22), the determination of the current position of the user being made by a UWB geolocation technique made by using the first UWB module (10) and the second UWB module (22).

12. Audio playback method according to claim 8, wherein the first UWB module is arranged to implement a UWB radar technology, the determination of the position of the walls (26) of the room being made by the master equipment by using said UWB radar technology.

13. Audio playback method according to claim 8, wherein the user (20), during the preliminary phase, is provided with a piece of mobile equipment (21) comprising a second UWB module (22), the preliminary phase comprising the step, for at least one sound source (3a, 3b), of emitting a second message intended for the user to request them to position the mobile equipment (21) in the immediate proximity of the sound source, the position of said sound source thus being assimilated to the position of the mobile equipment (21), which is determined by a UWB geolocation technique by using the first UWB module (10) and the second UWB module (22).

14. Audio playback method according to claim 8, wherein at least one sound source comprises a UWB *tag*, the master equipment being arranged to determine the position of said sound source by using a UWB geolocation technique made by using the first UWB module (10) and the UWB *tag*.

15. Master equipment (1) comprising a first UWB module (10) arranged to perform a geolocation, and a processing unit (7) arranged to implement the audio playback method according to one of the preceding claims.

16. Master equipment according to claim 15, the master equipment being a set-top box (1).

17. Computer program comprising instructions which make the processing unit (7) of the master equipment (1) according to one of claims 15 or 16, execute the steps of the audio playback method according to one of claims 1 to 14.

18. Recording medium which can be read by a computer, on which the computer program according to claim 17 is recorded.

Fig. 1

Fig. 2

Fig. 3

Fig. 4

Fig. 5

Fig. 6

Fig. 7

Fig. 8

Fig. 9

3a

33

Fig. 10

3b

35

3a

35

F1 (x, y), F2 (x, y), etc.

6

1

**EP 4 386 338 B1**

## RÉFÉRENCES CITÉES DANS LA DESCRIPTION

**Documents brevets cités dans la description**

*   WO 2022231338 A1